# EUROPÄISCHE PATENTANMELDUNG

(11) **EP 4 501 612 A1**
(43) Veröffentlichungstag der Anmeldung: **05.02.2025**
(21) Anmeldenummer: 24192301.0
(22) Anmeldetag: 01.08.2024
(51) Int. Cl.: B29D 11/00, G01J 3/46, G02C 7/10

(54) **VERFAHREN UND VORRICHTUNG ZUM FÄRBEN VON OPTISCHEN GLÄSERN UND GLASSYSTEM**

(30) Priorität: 02.08.2023 DE 102023120465
(71) Anmelder: Rodenstock GmbH, 80687 München (DE)
(72) Erfinder: SCHERG, Gerd-Peter, 85598 Baldham (DE); SOMMER, Hans-Peter, 80999 München (DE); BRUNNER, Hermann, 82234 Weßling (DE); MERKELBACH, Philipp, 82347 Benried (DE)
(74) Vertreter: Müller-Boré & Partner Patentanwälte PartG mbB

(57) **Zusammenfassung**

Ein Verfahren (1; 2) zum Färben eines optischen Glases, insbesondere eines Brillenglases, umfasst ein Erfassen zumindest einer geplanten Oberflächenbearbeitung an zumindest einer Oberfläche des optischen Glases, durch welche aus dem optischen Glas ein bearbeitetes optisches Glas wird. Es wird eine Zielfärbung des bearbeiteten optischen Glases erfasst. Es wird eine Vorhaltefärbung für das optische Glas ermittelt, mit welcher es als bearbeitetes optisches Glas nach Vornahme der zumindest einen geplanten Oberflächenbearbeitung in etwa die Zielfärbung aufweist. Das optische Glas wird mit der Vorhaltefärbung gefärbt.

## Beschreibung

Die vorliegende Erfindung betrifft Verfahren und Vorrichtungen zum Färben von optischen Gläsern, insbesondere von Brillengläsern sowie ein Glassystem.

Brillengläser werden oft mit oder aus Kunststoffmaterialien hergestellt. Die Kunststoffmaterialien können eine Eigenfärbung aufweisen, wobei je nach Material und Dicke unterschiedliche Farbtöne möglich sind (z.B. Grauton, Gelb- oder Blaustich). Beispielsweise beschreibt die DE 10 2017 000 698 A1 ein Verfahren, bei welchem die ortsabhängige Eigenfärbung eines Brillenglases beim Färbeprozess berücksichtigt werden kann.

Neben der dickenabhängigen Eigenfärbung gibt es noch weitere Einflüsse auf die Färbung eines fertigen Brillenglases. Ein Brillenglasrohling kann neben dem Färben weiteren Bearbeitungsschritten unterzogen werden, welche Einfluss auf die Färbung des fertig bearbeiteten Brillenglases haben können.

Nach einer Bearbeitung des Brillenglasrohlings zum Erhalt eines Brillenglases mit einer verordneten augenoptischen Wirkung kann er neben dem Färben demnach weitere Fertigungsschritte durchlaufen, welche Einfluss auf die Färbung des fertig bearbeiteten Brillenglases, d.h. nach Vornahme aller Fertigungsschritte, nehmen können. So kann beispielsweise eine Oberflächenbeschichtung einer oder beider Oberflächen des Brillenglases dazu führen, dass die Färbung des fertig bearbeiteten Brillenglases mit der Beschichtung von der Färbung des Brillenglases ohne Beschichtung abweicht. Auch andere Bearbeitungsschritte der Oberflächen des Brillenglases, wie beispielsweise Reinigungsschritte, können die Färbung beeinflussen.

Insbesondere Oberflächenbeschichtungen werden von Kunden zumeist individuell und/oder zusätzlich zu einer gewünschten Zielfärbung des Brillenglases ausgewählt. Inzwischen liegt gerade im Bereich der Oberflächenbeschichtungen eine Mehrzahl von möglichen Beschichtungen vor, welche beispielsweise jeweils eine Entspiegelung, Verspiegelung, Härtung, Schmutzabweisung bzw. -resistenz (auch als Easy-to-Clean Beschichtung bezeichnet), Antistatik, Anti-Fogging (bzw. Antibeschlag) und/oder UV- und/oder Blauschutz-Filterung ermöglichen. Ein Brillenglas kann eine Mehrzahl von möglichen Beschichtung-Färbung-Kombinationen aufweisen, welche sich auf die Färbung des fertig bearbeiteten Brillenglases nach dem Beschichten auswirken. Es ist demnach möglich, dass eine Zielfärbung für das fertig bearbeitete Brillenglas, die der Kunde anhand eines Musters auswählt, nicht der tatsächlichen Färbung des fertigen Brillenglases entspricht. Denn eine vom Kunden ausgewählte, bei der Konfiguration des Brillenglases optionale Oberflächenbearbeitung, insbesondere Oberflächenbeschichtung, kann eine Abweichung der letztlich resultierenden Färbung des Brillenglases von der ausgewählten Zielfärbung bewirken.

Die Anpassung von Färbungen eines Brillenglases in mehreren Schritten zur Erreichung von Zielfärbungen ist grundsätzlich bekannt. So beschreibt beispielsweise die DE 10 2010 055 939 A1 einen zweiteiligen Färbeprozess, bei welchem für ein Brillenglas nach einem ersten Färbeprozess eine Abweichung von einer Zielfärbung ermittelt wird. Diese Abweichung wird für ein Nachfärbemodell bereitgestellt, welches für einen zweiten Färbeprozess verwendet wird, um eine Färbung zu erzielen, welche näher an der Zielfärbung liegt. Zur objektiven Bestimmung einer Färbung eines Brillenglases sowie zur Überprüfung mit vorgegeben Werten kann beispielweise ein Verfahren wie in DE 10 2013 003 558 A1 beschrieben angewandt werden.

Diese vorbekannten Verfahren beruhen somit auf einem mehrteiligen Färbeprozess. Weiterhin berücksichtigen sie nicht einen Einfluss von Oberflächenbearbeitungen, die ggf. nach dem Färben vorgenommen werden. Nach der Oberflächenbearbeitung kann die Färbung üblicherweise nicht mehr korrigiert werden, was das Färben verkompliziert.

Aufgabe der Erfindung ist es, das Färben eines optischen Glases, insbesondere eines Brillenglases, zu verbessern. Insbesondere kann es eine Aufgabe sein, ein optisches Glas genauer und/oder kontrollierter zu färben.

Diese Aufgabe wird durch die Gegenstände der unabhängigen Ansprüche gelöst. Bevorzugte Ausführungsformen sind Gegenstand der abhängigen Ansprüche.

Ein Aspekt betrifft ein Verfahren zum Färben eines optischen Glases, insbesondere eines Brillenglases, wobei das Verfahren ein Erfassen zumindest einer geplanten Oberflächenbearbeitung an zumindest einer Oberfläche des optischen Glases umfasst, durch welche aus dem optischen Glas ein bearbeitetes optisches Glas wird. Das Verfahren umfasst weiterhin ein Erfassen einer Zielfärbung des bearbeiteten optischen Glases. Das Verfahren umfasst ein Ermitteln einer Vorhaltefärbung für das optische Glas, mit welcher es als bearbeitetes optisches Glas nach Vornahme der zumindest einen geplanten Oberflächenbearbeitung in etwa die Zielfärbung aufweist und ein Färben des optischen Glases mit der Vorhaltefärbung.

Das optische Glas kann als ein Ein- oder Mehrstärkenglas, als ein ophthalmisches Glas, als ein rohrundes und/oder als ein eingeschliffenes Glas ausgebildet sein. Das optische Glas kann aus einem vorbestimmten Glasmaterial bestehen und/oder gefertigt sein. Das Glasmaterial kann Kunststoff und/oder Mineralglas umfassen.

Der Begriff "Glas" gemäß der Erfindung betrifft im allgemeinen amorphe Feststoffe, die beim Abkühlen aus einer Schmelze im Bereich der Glasübergangstemperatur in den festen Zustand übergehen, ohne dabei zu kristallisieren, welche insbesondere einen Anteil an Siliziumdioxid aufweisen, z.B. Quarzglas, Kronglas, Flintglas und Borosilikatglas und daher auch Mineralglas genannt werden. Erfindungsgemäß können jedoch auch eine Reihe anderer durchsichtiger Stoffe unter dem Begriff "Glas" verstanden werden, beispielsweise organische Gläser bzw. Kunststoffgläser, beispielsweise für Brillen, Kunststoffplatten, insbesondere aus Acrylglas für Sichtfenster in Gehäusen, Gebäuden und ähnlichem oder für aus Keramik bestehende durchsichtige Gegenstände, wie beispielsweise das Schauglas eines Kaminofens oder Glaskeramikkochfelder. Glas im Sinne der Anmeldung kann aber auch natürliche durchsichtige mineralische fest Materialien umfassen, wie beispielsweise kristallines Siliziumdioxid oder dünne Schichtsilikate oder natürliche Gläser wie z.B. Moldavite oder Marienglas. Der Glaskörper kann sowohl planparallel bzw. plattenförmig oder gekrümmt ausgebildet sein.

Bei dem Verfahren wird zumindest die eine geplante Oberflächenbearbeitung an zumindest einer Oberfläche des optischen Glases erfasst. Die zumindest eine geplante Oberflächenbearbeitung kann zumindest eine Oberflächenbearbeitung umfassen, welche z.B. von einem Kunden aus einer Mehrzahl von vorgegebenen Oberflächenbearbeitungen ausgewählt ist, z.B. eine Oberflächenbeschichtung. Weiterhin kann die zumindest eine geplante Oberflächenbearbeitung zumindest eine Oberflächenbearbeitung umfassen, welche z.B. von einem Optiker und/oder einem Hersteller aus einer Mehrzahl von vorgegebenen Oberflächenbearbeitungen ausgewählt ist, z.B. einen Reinigungsschritt und/oder ein Aufbringen einer Kratzschutzschicht wie einem Hartlack.

Die zumindest eine Oberfläche des optischen Glases kann beispielsweise als eine Vorderseite des optischen Glases oder als eine Rückseite des optischen Glases ausgebildet sein. Diese Vorderseite kann z.B. konvex ausgebildet sein und/oder in Gebrauchsstellung vom Auge eines Brillenträgers weg gerichtet sein. Die Rückseite des optischen Glases kann z.B. konkav ausgebildet sein und/oder in Gebrauchsstellung zum Auge eines Brillenträgers hin gerichtet sein. Die zumindest eine geplante Oberflächenbearbeitung kann auch sowohl an der vorderen Oberfläche als auch an der rückwärtigen Oberfläche geplant sein.

Es kann die Vornahme mehr als einer Oberflächenbearbeitungen geplant sein.

In diesem Zusammenhang kann "geplant" bedeuten, dass die Oberflächenbearbeitung am unbearbeiteten optischen Glas noch nicht durchgeführt ist, sondern diese Durchführung lediglich geplant ist. Das unbearbeitete optische Glas kann somit für die Vornahme und/oder Durchführung der zumindest einen geplanten Oberflächenbearbeitung vorbestimmt sein oder werden. Erst am bearbeiteten optischen Glas ist die Oberflächenbearbeitung bereits durchgeführt.

Die Oberflächenbearbeitung kann eine Bearbeitung einer Oberfläche des optischen Glases betreffen. Beispielhaft kann die Oberflächenbearbeitung als eine Beschichtung der Oberfläche, eine Reinigung der Oberfläche, und/oder eine vorbereitende Bearbeitung der Oberfläche für weitere Oberflächenbearbeitungen ausgebildet sein.

Durch Vornahme der zumindest einen geplanten Oberflächenbearbeitung wird aus dem optischen Glas das bearbeitete optische Glas. Mit anderen Worten wird das optische Glas nach Vornahme der zumindest einen geplanten Oberflächenbearbeitung als bearbeitetes optisches Glas bezeichnet.

Durch die Vornahme der zumindest einen geplanten Oberflächenbearbeitung kann die Färbung des optischen Glases beeinflusst werden und/oder sich verändern. Dies bedeutet, dass die zumindest eine geplante Oberflächenbearbeitung derart ausgebildet sein kann, dass sie eine Färbungsveränderung am optischen Glas bewirkt und/oder bewirken kann.

Bei dem Verfahren wird die Zielfärbung des bearbeiteten optischen Glases erfasst. Die Zielfärbung kann hierbei aus einer Mehrzahl von vorgegebenen Zielfärbungen, insbesondere durch einen Kunden, ausgewählt sein. Diese Mehrzahl von vorgegebenen Zielfärbungen kann als Farbportfolio bezeichnet werden und/oder ausgebildet sein. Die Zielfärbung betrifft das bearbeitete optische Glas, welches der Kunde erhalten soll. Mit anderen Worten entspricht die Zielfärbung des bearbeiteten optischen Glases einer ausgewählten und/oder bestimmten Zielfärbung, welche das optische Glas nach Vornahme der zumindest einen geplanten Oberflächenbearbeitung letztlich aufweisen soll.

Nachdem sowohl die zumindest eine Oberflächenbearbeitung als auch die Zielfärbung erfasst sind, kann dadurch eine für das optische Glas vorbestimmte und/oder ausgewählte Färbungs-Oberflächenbearbeitung-Kombination erfasst und/oder bestimmt sein. Diese Färbungs-Oberflächenbearbeitung-Kombination legt sowohl die Zielfärbung für das fertig bearbeitete optische Glas fest als auch die (z.B. sämtlichen) Oberflächenbearbeitungen, mit welchen aus dem optischen Glas das bearbeitete optische Glas wird.

Die Zielfärbung kann anhand zumindest eines Glasmusters ausgewählt sein oder werden, welches die Zielfärbung aufweist. So kann z.B. ein Optiker den Kunden die Zielfärbung aus einem Muster-Portfolio auswählen lassen, welches eine Mehrzahl unterschiedlich gefärbter Glasmuster aufweist. Das oder die Glasmuster kann oder können unbeschichtet und/oder unbearbeitet ausgebildet sein. An dem oder den Glasmuster(n) können zumindest teilweise zu den geplanten Oberflächenbearbeitungen verschiedene Oberflächenbearbeitungen vorgenommen worden sein. Bevorzugt weisen die Glasmuster keine Oberflächenbearbeitungen auf, da es eine Vielzahl möglicher Oberflächenbearbeitungen gibt und es oft unwirtschaftlich ist, jedes Glasmuster in Kombination mit allen möglichen Oberflächenbearbeitungen in einem Muster-Portfolio bereitzustellen. Somit kann sich jedenfalls die Färbungs-Oberflächenbearbeitung-Kombination des oder der Glasmuster von der für das optische Glas erfassten Färbungs-Oberflächenbearbeitung-Kombination unterscheiden.

Bei dem Verfahren wird die Vorhaltefärbung für das optische Glas ermittelt, mit welcher es als bearbeitetes optisches Glas nach Vornahme der zumindest einen geplanten Oberflächenbearbeitung in etwa die Zielfärbung aufweist. Unter der Vorhaltefärbung wird eine Färbung des optischen Glases verstanden, welche von der Zielfärbung verschieden sein kann. Insbesondere wenn die zumindest eine geplante Oberflächenbearbeitung eine Auswirkung auf die Färbung des bearbeiteten optischen Glases hat, kann die Vorhaltefärbung verschieden von der Zielfärbung ausgebildet sein.

Die Vorhaltefärbung wird für das optische Glas so ermittelt, dass das bearbeitete optische Glas nach Vornahme der zumindest einen geplanten Oberflächenbearbeitung in etwa die Zielfärbung aufweist. Mit anderen Worten weist ein optisches Glas, welches vor Vornahme der zumindest einen geplanten Oberflächenbearbeitung mit der Vorhaltefärbung gefärbt ist oder wird, als bearbeitetes optisches Glas nach Vornahme der zumindest einen geplanten Oberflächenbearbeitung in etwa die Zielfärbung auf. Die ermittelte Vorhaltefärbung kann spezifisch für genau die erfasste Zielfärbung in Kombination mit genau der erfassten zumindest einen geplanten Oberflächenbearbeitung ermittelt werden. Mit anderen Worten kann die so ermittelte Vorhaltefärbung genau der erfassten Färbungs-Oberflächenbearbeitung-Kombination zugeordnet sein.

Durch die Ermittlung der geeigneten Vorhaltefärbung wird die zumindest eine geplante Oberflächenbearbeitung bereits beim und/oder vor dem Färben berücksichtigt. Dies kann anhand einer Berücksichtigung des von der Oberflächenbearbeitung voraussichtlich verursachten Färbungsbeeinflussung erfolgen. Dies kann es ermöglichen, bei der Fertigung eines Brillenglases auf einen mehrstufigen Färbeprozess zu verzichten, bei welchem z.B. nachgelagerte Überprüfungen der Färbung und gegebenenfalls notwendige Nachfärbungen vorgenommen werden müssen. Somit kann der Fertigungsprozess von Brillengläsern verbessert und/oder effizienter gestaltet und/oder vereinfacht werden. Insbesondere wird es so ermöglicht, das Färben des optischen Glases besser zu kontrollieren und/oder zielgerichteter durchzuführen.

Bei dem Verfahren wird das optische Glas mit der Vorhaltefärbung gefärbt. Mit anderen Worten wird das optische Glas so gefärbt, dass es nach dem Färben die Vorhaltefärbung aufweist. Das Färben kann mittels bekannter Färbetechniken erfolgen, z.B. dem Nidek-Verfahren, dem Itoh-Verfahren, und/oder mittels Tauchfärbebädern.

Das mit der Vorhaltefärbung gefärbte optische Glas kann danach der zumindest einen Oberflächenbearbeitung unterzogen werden. Da diese Oberflächenbearbeitungen einen Färbungseinfluss auf das mit der Vorhaltefärbung gefärbte optische Glas bewirken können, weist es anschließend, also als bearbeitetes optisches Glas, in etwa die Zielfärbung auf und nicht etwa mehr die Vorhältefärbung. So kann es der Kunde trotz Vornahme der zumindest einen Oberflächenbearbeitung zumindest in etwa mit genau der Zielfärbung erhalten, der er zuvor z.B. anhand eines Glasmusters ausgewählt hat.

Der Begriff "Erfassen" im Sinne der vorliegenden Anmeldung kann ein "Erhalten", "Auslesen", "Entnehmen einer Datenbank und/oder einer Tabelle", "Bereitstellen", "Empfangen", "Berechnen" und so weiter beinhalten. Der Begriff "Bestimmen" im Sinne der vorliegenden Anmeldung kann ein "Festlegen", "Berechnen", "Abschätzen", "Auswählen" und so weiter beinhalten. Demnach ermöglicht das Erfassen der zumindest einen geplanten Oberflächenbearbeitung und der Zielfärbung, dass das Verfahren die Auswahl nicht beinhalten muss, sondern zum Beispiel lediglich erfasst wird, welche Zielfärbung bereits ausgewählt wurde. Es ist demnach möglich, diese Auswahl räumlich und/oder zeitlich unabhängig von der Erfassung vorzunehmen, solange am Ort und zur Zeit der Erfassung die Auswahl erfasst werden kann.

Hierbei bedeutet der Ausdruck "in etwa" eine Färbung aufweisen, also insbesondere, dass das bearbeitete optische Glas in etwa die Zielfärbung aufweist, dass diese Färbung nahezu erreicht wird. Er umfasst insbesondere und bevorzugt den Fall, dass sich die Färbungen "genau" entsprechen. Der Ausdruck kann aber auch eine Farbabweichung innerhalb eines vorgegebenen Toleranzkriteriums umfassen. Dieses vorgegebene Toleranzkriterium kann dabei z.B. eine tolerierbare Abweichung in Farbraumkoordinaten (z. B. Δτ und/oder ΔL* und/oder Δa* und/oder Δb*) und/oder eine tolerierbare Abweichung im Rahmen eines definierten Farbunterschieds ΔE, ΔE₉₄, und/oder ΔE₀₀ (nach Norm) und/oder eine tolerierbare Abweichung unter Berücksichtigung von gängigen "Toleranzellipsen" betreffen. Z.B. können hierfür Toleranzellipsen verwendet werden, welche die menschliche Farbwahrnehmung beschreiben. Es kann z.B. ein Toleranzkriterium verwendet werden, nach welchem zumindest 50% der Menschen, bevorzugt zumindest 80% der Menschen keinen Färbungsunterschied mehr wahrnehmen. So kann z.B. ein fester Farbabstand ΔE für jeden Farbton von den meisten Menschen als gleich wahrgenommen werden und das Toleranzkriterium innerhalb dieses Farbabstands ΔE liegen. Insbesondere kann als das Toleranzkriterium ein maximal tolerabler Farbunterschied von ΔE=2,0 (entsprechend einem geringen Farbunterschied), bevorzugt von ΔE=1,0 (entsprechend einem nur für das geübte Auge wahrnehmbaren Farbunterschied), besonders bevorzugt von ΔE=0,5 (entsprechend einem nahezu unmerklichen Farbunterschied) verwendet werden.

Gemäß einer Ausführungsform ist oder wird die Vorhaltefärbung mittels Variation und/oder Optimierung einer Vorfärbung dahingehend bestimmt, dass das mit der Vorfärbung gefärbte optische Glas als bearbeitetes optisches Glas nach der Vornahme der zumindest einen geplanten Oberflächenbearbeitung in etwa die Zielfärbung aufweist. Mit anderen Worten wird zur Bestimmung der Vorhaltefärbung die Vorfärbung ein- oder mehrfach variiert und/oder optimiert. Die Vorfärbung dient dabei als variabler Parameter, der variiert und/oder optimiert wird. Ziel und/oder Abbruchsbedingung der Variation und/oder Optimierung ist es, dass das mit der Vorfärbung gefärbte optische Glas als bearbeitetes optisches Glas nach der Vornahme der zumindest einen geplanten Oberflächenbearbeitung in etwa die Zielfärbung aufweist. Die Variation und/oder Optimierung kann z.B. unter Verwendung von Berechnungsverfahren, Schätzungen, physischen Glasmustern, oder einer Kombination daraus erfolgen.

Die Bestimmung der Vorhaltefärbung mittels Variation und/oder Optimierung der Vorfärbung kann es ermöglichen, das Ermitteln vom Bestimmen der Vorhaltefärbung zu trennen. Im Rahmen der Optimierung und/oder Variation kann die Vorfärbung verändert werden, bis sich daraus die zum Färben benötigte Vorhaltefärbung ergibt. Die Optimierung und/oder Variation kann beendet werden, sowie die Vorhaltefärbung bestimmt ist. So kann eine Vorhaltefärbung, welche einmal für die erfasste Zielfärbung und die erfasste zumindest eine geplante Oberflächenbearbeitung bestimmt ist, mehrmals in einzelnen, zum Beispiel voneinander unabhängigen Verfahren zum Färben optischer Gläser verwendet und/oder ermittelt werden. Die Vorhaltefärbung kann iterativ bestimmt sein oder werden, was die Effizienz und/oder Genauigkeit der Bestimmung erhöhen kann. Die Bestimmung kann vorab durchgeführt worden sein und/oder die bestimmte Vorfärbung kann zum Beispiel in einer Datenbank hinterlegt sein oder werden. Dies kann das Verfahren verkürzen und/oder vereinfachen.

In einer Ausführungsform wird als Startpunkt der Variation und/oder Optimierung als die Vorfärbung die Zielfärbung verwendet. Mit anderen Worten kann bei der Variation und/oder Optimierung zunächst von der Zielfärbung als Vorfärbung ausgegangen werden. Alternativ kann als Startpunkt der Variation und/oder Optimierung als Vorfärbung auch eine Färbung verwendet werden, welche bereits vorvariiert und/oder voroptimiert ist, z.B. basierend auf Erfahrungen und/oder Schätzungen und/oder Berechnungen für eine andere Färbungs-Oberflächenkombination-Kombination als die Erfasste.

Die Zielfärbung kann sich als Startpunkt gut eignen, um die Variation und/oder Optimierung vergleichsweise zügig konvergieren zu lassen, da die Zielfärbung nah an der letztlich bestimmten Vorhaltefärbung liegen kann. Die Verwendung einer Färbung, welche bereits vorvariiert und/oder voroptimiert ist, kann es ermöglichen, den Aufwand für die Variation und/oder Optimierung der Vorfärbung zu verringern.

In einer Ausführungsform wird bei der Variation und/oder Optimierung der Vorfärbung eine Mehrzahl von Produktkombinationen berücksichtigt, von denen jede Produktkombination eine Produktzielfärbung aufweist, die aus einer Mehrzahl von vorgegebenen Zielfärbungen ausgewählt ist, welche die erfasste Zielfärbung umfasst. Jede Produktkombination weist zudem zumindest eine geplante Produktoberflächenbearbeitung auf, die aus einer Mehrzahl von vorgegebenen Oberflächenbearbeitungen ausgewählt ist, welche die erfasste zumindest eine Oberflächenbearbeitung umfasst.

Hierbei kann die Mehrzahl der Produktkombinationen eine Auswahlkombination umfassen, welche die zumindest eine erfasste Oberflächenbearbeitung und die erfasste Zielfärbung aufweist. Mit anderen Worten entspricht die Auswahlkombination einer Kombination der erfassten Zielfärbung und der zumindest einen erfassten Oberflächenbearbeitung, also der voranstehend erwähnten erfassten Färbungs-Oberflächenbearbeitung-Kom bination.

Dies kann es ermöglichen, die Anzahl von Produktkombinationen zu begrenzen. Weiter kann für jede Produktkombination eine zugeordnete Vorfärbung bestimmt sein oder werden. Da unterschiedliche Produktkombinationen zumindest teilweise gleiche Produktoberflächenbearbeitungen und/oder Produktzielfärbungen aufweisen können, können zum Beispiel Einflüsse solcher gleichen Produktoberflächenbearbeitungen und/oder Produktzielfärbungen bei der Variation und/oder Optimierung berücksichtigt werden. So kann das Bestimmen der jeweils zugehörigen Vorhaltefärbung vereinfacht werden.

Eine Produktkombination kann als eine Färbungs-Oberflächenbearbeitung-Kombination für ein optisches Glas bezeichnet werden, wobei diese Kombination die erfasste zumindest eine geplante Produktoberflächenbearbeitung und die erfasste Produktzielfärbung umfasst. Somit kann die Auswahlkombination der erfassten Färbungs-Oberflächenbearbeitung-Kombination entsprechen.

Die Produktzielfärbung ist aus der Mehrzahl von vorgegebenen Zielfärbungen ausgewählt, wobei diese Mehrzahl die erfasste Zielfärbung umfasst. Demnach kann als Produktzielfärbung z.B. die erfasste Zielfärbung ausgewählt sein oder eine von der erfassten Zielfärbung verschiedene Zielfärbung aus der Mehrzahl von vorgegebenen Zielfärbungen. Die zumindest eine geplante Produktoberflächenbearbeitung ist aus der Mehrzahl von vorgegebenen Oberflächenbearbeitungen ausgewählt, wobei diese Mehrzahl die zumindest eine erfasste Oberflächenbearbeitung umfasst. Demnach kann als zumindest eine geplante Produktoberflächenbearbeitung z.B. die zumindest eine erfasste Oberflächenbearbeitung ausgewählt sein oder eine von der zumindest einen erfassten Oberflächenbearbeitung verschiedene Oberflächenbearbeitung aus der Mehrzahl von vorgegebenen Oberflächenbearbeitungen.

Die Mehrzahl von Produktzielfärbungen kann zum Beispiel sämtliche von einem Anbieter, also z.B. einem Optiker oder Hersteller, angebotenen Zielfärbungen umfassen. Die Mehrzahl von Produktoberflächenbearbeitungen kann zum Beispiel sämtliche von einem Anbieter, also z.B. einem Optiker oder Hersteller, angebotenen Oberflächenbearbeitungen umfassen. Die Mehrzahl von Produktkombinationen kann zum Beispiel sämtliche technisch möglichen Kombinationen von Produktzielfärbungen und Produktoberflächenbearbeitungen umfassen und/oder sämtliche solcher Kombinationen, welche von dem Anbieter angeboten werden. Die Mehrzahl von Produktkombinationen kann somit einem Produktportfolio des Anbieters entsprechen, aus welchem ein Kunde sein Brillenglas auswählen kann.

Die konkrete Auswahl kann zumindest teilweise vom Kunden getroffen werden und/oder zumindest teilweise von einem Optiker. So kann der Kunde z.B. eine von ihm gewünschte Zielfärbung aus der Mehrzahl von vorgegebenen Zielfärbungen auswählen. Hierbei können dem Kunden z.B. eine Mehrzahl von Glasmustern vorgelegt werden, von denen jedes Glasmuster mit einer anderen der vorgegebenen Zielfärbungen gefärbt ist. Der Kunde kann somit z.B. zunächst lediglich die von ihm gewünschte Zielfärbung auswählen, ohne dabei zunächst die Oberflächenbearbeitungen zu beachten. Eine zusätzliche Berücksichtigung sämtlicher Produktkombinationen, also sämtlicher möglicher Oberflächenbearbeiten, würde diese Auswahl verkomplizieren und/oder die Anzahl der dafür notwendigen Glasmuster stark erhöhen. Darauf kann bei dem Verfahren somit verzichtet werden. Das Verfahren kann somit durchgeführt werden, ohne dass z.B. jeweils ein Produktmuster für jede mögliche Produktkombination benötigt würde. Glasmuster für die unterschiedlichen Zielfärbungen sind bereits ausreichend.

In einer Ausführungsform werden für jede Produktkombination in einem Ermittlungsschritt mehrere Einflussfaktoren ermittelt, wobei die Einflussfaktoren Abweichungen einer Färbung des bearbeiteten optischen Glases nach Vornahme der zumindest einen geplanten Produktoberflächenbearbeitung von der Färbung des optischen Glases vor der Vornahme der zumindest einen geplanten Produktoberflächenbearbeitung bewirken. Mit anderen Worten können die Einflussfaktoren die Färbung des optischen Glases beeinflussen. Sie können abhängig sein von der Produktkombination, dem optischen Glas, der Vornahme der zumindest einen geplanten Produktoberflächenbearbeitung, und/oder insbesondere weiterer Prozessschritte des Färbens. Die Ermittlung der Einflussfaktoren für jede Produktkombination kann es ermöglichen, bei einem Vergleich die Variation und/oder Optimierung sinnvoll einzuschränken und/oder relevante Färbungseinflüsse zu bestimmen.

In einer Ausführungsform wird als zumindest einer der Einflussfaktoren das Material des optischen Glases ermittelt, und/oder die zumindest eine geplante Produktoberflächenbearbeitung, und/oder eine spektrale innere Transmission des optischen Glases, und/oder eine spektrale Transmission der Oberfläche des bearbeiteten optischen Glases nach Vornahme der zumindest einen geplanten Produktoberflächenbearbeitung. So kann z.B. ein unterschiedliches Material des optischen Glases eine Abweichung der Färbung des bearbeiteten optischen Glases bewirken. Dies kann z.B. dann der Fall sein, wenn das optische Glas ein Material mit einem Brechungsindex von 1,6 aufweist, das Glasmuster, welches zur Auswahl der Zielfärbung verwendet wird, aber mit einem Material mit einem Brechungsindex von 1,5 gefertigt ist. Wird das Material als Einflussfaktor für die Produktkombinationen bestimmt, so kann die Variation und/oder Optimierung der Vorfärbung dahingehen erfolgen, dass ein vom Material des optischen Glases bewirkte Einfluss in etwa kompensiert wird.

Die Ermittlung jeder dieser Einflussfaktoren für sich kann es ermöglichen, die jeweils relevanten Einflüsse bei der Variation und/oder Optimierung der Vorfärbung aufzulisten und/oder zu berücksichtigen. Jeder dieser Einflussfaktoren für sich kann im Zusammenhang mit einer Färbung des optischen Glases zum Beispiel unabhängig von Einflüssen durch andere Einflussfaktoren berücksichtigt werden.

In einer Ausführungsform wird in einem Abweichungsmodellerstellungsschritt für jede Produktkombination ein Abweichungsmodell erstellt, welches für jede Produktkombination eine spezifische Färbungsabweichung enthält. Die spezifische Färbungsabweichung beschreibt einen Färbungsunterschied zwischen der Produktzielfärbung der jeweiligen Produktkombination einerseits und einer sich ergebenden Gesamtfärbung eines optischen Glases andererseits, welches mit dieser Produktzielfärbung gefärbt ist und zusätzlich mit der zumindest einen Produktoberflächenbearbeitung der jeweiligen Produktkombination bearbeitet ist. Mit anderen Worten kann das Abweichungsmodell für jede einzelne Produktkombination die für diese Produktkombination spezifische Färbungsabweichung aufweisen und/oder ausweisen. Wie voranstehend ausgeführt, weist jede Produktkombination die ihr zugeordnete Produktzielfärbung auf, welche aus der Mehrzahl von vorgegebenen Zielfärbungen ausgewählt ist, sowie zumindest eine ihre zugeordnete Produktoberflächenbearbeitung, welche aus der Mehrzahl von vorgegebenen Oberflächenbearbeitungen ausgewählt ist.

Die für jede Produktkombination spezifische Färbungsabweichung beschreibt, wie sich die der Produktkombination zugeordnete Produktzielfärbung verändert, wenn ein optisches Glas mit der zumindest einen der Produktkombination zugeordneten Produktoberflächenbearbeitung bearbeitet wird. Denn wie bereits einleitend ausgeführt, verändert sich die Färbung eines optischen Glases normalerweise, wenn die Produktoberflächenbearbeitung daran durchgeführt wird. Das Abweichungsmodell beschreibt nun, welche Gesamtfärbung sich für jede Produktkombination ergeben würde, wenn das optische Glas einfach so mit der zugeordneten Produktzielfärbung gefärbt würde, d.h. ohne die zugeordnete Produktoberflächenbearbeitung vorab zu berücksichtigen. Das Abweichungsmodell hält für jede Produktkombination die sich dabei ergebende spezifische Färbungsabweichung von der Produktzielfärbung fest. Dabei kann das Abweichungsmodell für jede Produktkombination z.B. unmittelbar die spezifische Färbungsabweichung beinhalten, d.h. den Färbungsunterschied von der zugeordneten Produktzielfärbung. Das Abweichungsmodell kann stattdessen für jede Produktkombination die sich ergebende Gesamtfärbung beinhalten, d.h. die zugeordnete Produktzielfärbung plus die spezifische Färbungsabweichung. Im letztgenannten Fall enthält das Abweichungsmodell die spezifische Färbungsabweichung nur mittelbar. Sie kann jedoch ohne weiteres aus der sich ergebenden Gesamtfärbung und der zugeordneten Produktzielfärbung berechnet werden.

Das Abweichungsmodell kann zunächst rein theoretisch und/oder mathematisch erstellt werden, d.h. ohne die spezifischen Färbungsabweichungen real zu vermessen. Die spezifischen Färbungsabweichungen können vielmehr zunächst berechnet und/oder simuliert werden.

Die Erstellung eines Abweichungsmodells kann es ermöglichen, auch für die Auswahlkombination die spezifische Färbungsabweichung anzugeben. Die Berücksichtigung dieser spezifischen Färbungsabweichung bei der Variation und/oder Optimierung der Vorfärbung kann es ermöglichen, den Aufwand der Variation und/oder Optimierung zu verringern. Zudem kann die Erstellung des Abweichungsmodells für alle Produktkombinationen es ermöglichen und/oder erleichtern, für jede Produktkombination einschließlich der Auswahlkombination eine zugeordnete und/oder spezifische Vorhaltefärbung zu bestimmen.

Bei der Erstellung des Abweichungsmodells kann z.B. zunächst für eine erste Produktkombination mit einer zugehörigen ersten Produktzielfärbung und einer zugehörigen ersten Produktoberflächenbearbeitung eine erste spezifische Färbungsabweichung ermittelt werden. Wird danach für eine zweite Produktkombination eine zweite spezifische Färbungsabweichung ermittelt, und weist diese zweite Produktkombination neben einer zugehörigen zweiten Produktzielfärbung ebenfalls die erste Produktoberflächenbearbeitung auf, so kann ggf. die bereits (für die erste Produktkombination) berechnete Auswirkung dieser ersten Produktoberflächenbearbeitung berücksichtigt werden. Mit anderen Worten können Berechnungen von spezifischen Färbungsabweichung, die bereits für einige Produktkombinationen angestellt worden sind, bei der Berechnung der übrigen spezifischen Färbungsabweichung berücksichtigt werden.

So kann das Abweichungsmodell für die verschiedenen Produktkombinationen effizienter ermittelt werden. Bei der Verwendung des Abweichungsmodells kann somit eine effizientere Bestimmung von spezifischen Färbungsabweichungen im Vergleich zu einer experimentellen Bestimmung ermöglicht werden.

In einer Ausführungsform erfolgt bei der Bestimmung der Vorhaltefärbung in einem Stichprobenschritt eine Stichprobenprüfung, bei welcher das Abweichungsmodell mittels Stichproben überprüft wird. Mit anderen Worten kann für zumindest eine der Produktkombinationen zumindest eine Stichprobe gefertigt werden. Als Stichprobe wird ein dem optischen Glas in etwa entsprechendes Stichprobenglas mit derjenigen Produktzielfärbung gefärbt, die der jeweiligen Produktkombination zugeordnet ist. Danach wird an dem so gefärbten Stichprobenglas die zumindest eine geplante Produktoberflächenbearbeitung vorgenommen, welche der jeweiligen Produktkombination zugeordnet ist. Bevorzugt werden so mehrere der Produktkombinationen stichprobenhaft überprüft, z.B. zumindest etwa 5% der Produktkombinationen, bevorzugt zumindest etwa 10% der Produktkombinationen, besonders bevorzugt zumindest etwa 20% der Produktkombinationen. Natürlich können auch sämtliche Produktkombinationen mittels solcher Stichproben überprüft werden. Die Überprüfung des Abweichungsmodells kann zum Beispiel einen Vergleich der durch das Abweichungsmodell bestimmten spezifischen Färbungsabweichung der Produktkombinationen mit durch Stichproben ermittelten Färbungsabweichungen und/oder ermittelten Gesamtfärbungen umfassen. Dies kann es ermöglichen, das Abweichungsmodell einfach und effizient zu überprüfen.

Hierbei kann das Abweichungsmodell an das Ergebnis der Stichprobenprüfung angepasst und/oder optimiert werden, wenn eine Gesamtfärbung zumindest einer der Stichproben stärker als eine vorbestimmte Toleranz von sich gemäß dem Abweichungsmodell ergebenden Gesamtfärbungen abweicht. Hierbei kann mittels der vorbestimmten Toleranz festgelegt werden, wie stark die Gesamtfärbung der Stichprobe von der Gesamtfärbung abweichen darf, welche sich aus dem Abweichungsmodell ergibt. Die sich aus dem Abweichungsmodell ergebende Gesamtfärbung entspricht der Summe aus der Produktkombination-spezifischen Produktzielfärbung und der zugehörigen spezifischen Färbungsabweichung.

Die Bestimmung der Toleranz kann hierbei von der Quantifizierung der Färbungsabweichung abhängen. Je nach Art der Quantifizierung und/oder Anforderungen an die Genauigkeit des Abweichungsmodells kann die Toleranz als Wertebereich mittels Addition und Subtraktion eines Differenzwertes oder als Faktor festgelegt sein, z.B. als prozentualer Anteil. Je enger die Toleranz gewählt wird, umso höher sind die Genauigkeitsanforderungen an den Stichprobenvergleich. Hierbei kann die Toleranz auch auf quasi-identisch reduziert festgelegt werden. Hierbei dürfen die Gesamtfärbungen z.B. nicht mehr mit dem Auge wahrnehmbar voneinander abweichen, und/oder nicht mehr messbar, z.B. mittels eines vorbestimmten Messgeräts.

Die Stichprobenprüfung kann eine einfache Feststellung der Genauigkeit, eine Überprüfung, eine Anpassung und/oder Optimierung des Abweichungsmodells ermöglichen. Hierbei können die Ergebnisse der Stichprobenprüfung auch auf Produktkombinationen übertragen werden, für welche keine Stichprobe gefertigt wurde. Die Festlegung von Toleranzbereichen kann eine Steigerung der Effizienz der Stichprobenprüfung ermöglichen.

In einer Ausführungsform wird in einem Vorfärbungsmodellerstellungsschritt ein Vorfärbungsmodell erstellt, welches für jede Produktkombination eine zugeordnete Vorfärbung enthält. Die zugeordnete Vorfärbung ist so bestimmt, dass ein mit dieser zugeordneten Vorfärbung gefärbtes optisches Glas nach Vornahme der jeweiligen zumindest einen Produktoberflächenbearbeitung die Produktzielfärbung aufweist.

Die Erstellung des Vorfärbungsmodells kann es ermöglichen, z.B. für die Auswahlkombination eine zugeordnete Auswahlvorfärbung zu bestimmen. Die Berücksichtigung dieser Auswahlvorfärbung bei der Variation und/oder Optimierung der Vorfärbung kann es ermöglichen, den Aufwand bei der Variation und/oder Optimierung zu verringen. Die Erstellung des Vorfärbungsmodells für alle Produktkombinationen kann es ermöglichen, für jede der Produktkombinationen, also auch für eine von der Auswahlkombination verschiedene Produktkombination, eine zugeordnete Vorhaltefärbung effizienter zu ermitteln, welche beim Färben des optischen Glases berücksichtigt werden kann. Bei der Bestimmung von Vorhaltefärbungen kann direkt auf die durch das Vorfärbungsmodell bestimmten Vorfärbungen zurückgegriffen werden. So kann z.B. die durch das Vorfärbungsmodell für die jeweilige Produktkombination bestimmte Vorfärbung als dieser Produktkombination zugeordnete Vorhaltefärbung bestimmt werden. Oder es kann die durch das Vorfärbungsmodell für die jeweilige Produktkombination bestimmte Vorfärbung anschließend optimiert und/oder variiert werden, um so die zugeordnete Vorhaltefärbung zu bestimmen. Durch die Verwendung des Vorfärbungsmodells kann eine effizientere Bestimmung von Vorfärbungen ermöglicht werden als bei einer (z.B. ausschließlich) experimentellen Bestimmung.

In einigen Ausführungsformen mit dem Vorfärbungsmodell ist die der Produktkombination zugeordnete Vorfärbung basierend auf der für die jeweilige Produktkombination im Abweichungsmodell enthaltenen spezifischen Färbungsabweichung bestimmt. Mit anderen Worten kann hierbei für eine Produktkombination die im Abweichungsmodell enthaltene jeweilige Produktkombination-spezifische Färbungsabweichung verwendet werden, um ausgehend von der jeweiligen Produktkombination-spezifischen Produktzielfärbung die dieser Produktkombination zugeordnete Vorfärbung zu bestimmen.

Dies kann es für eine oder jede Produktkombination ermöglichen, die jeweilige Produktkombination-spezifische Produktzielfärbung direkt unter Verwendung der Produktkombination-spezifischen Färbungsabweichung zu korrigieren und/oder abzuändern, um so die dieser Produktkombination zugeordnete Vorfärbung zu bestimmen. Je nach Quantifizierung der Produktzielfärbung und Vorfärbung sowie der spezifischen Färbungsabweichung kann eine Korrektur beispielsweise additiv oder über einen Faktor erfolgen. Dies kann eine einfache Bestimmung der zugeordneten Vorfärbungen ermöglichen.

In einer Ausführungsform erfolgt bei der Bestimmung der Vorhaltefärbung eine Prüfung in einem Prüfungsschritt, in welcher das Vorfärbungsmodell mittels Prüfungsstichproben überprüft wird. Mit anderen Worten kann für zumindest eine der Produktkombinationen zumindest eine Prüfungsstichprobe gefertigt werden. Dabei kann die Prüfungsstichprobe derart gefertigt werden, dass ein dem optischen Glas in etwa entsprechendes Prüfungsstichprobenglas mit derjenigen zugeordneten Vorfärbung gefärbt wird, die der jeweiligen Produktkombination zugeordnet ist. Danach wird am Prüfungsstichprobenglas die zumindest eine geplante Produktoberflächenbearbeitung vorgenommen, welche der jeweiligen Produktkombination zugeordnet ist. Eine Überprüfung des Vorfärbungsmodells kann zum Beispiel einen Vergleich einer Färbung eines so bearbeiteten Prüfungsstichprobenglases, welches mit der zugeordneten Vorfärbung gefärbt ist und an welchem die jeweilige zumindest eine Produktoberflächenbearbeitung vorgenommen ist, mit der jeweiligen Produktzielfärbung umfassen. Bevorzugt werden so mehrere der Vorhaltefärbungen mittels Prüfungsstichproben überprüft, z.B. zumindest etwa 5% der Vorhaltefärbungen, bevorzugt zumindest etwa 10% der Vorhaltefärbungen, besonders bevorzugt zumindest etwa 20% der Vorhaltefärbungen.

Hierbei kann einer oder können mehrere der Schritte der Bestimmung der Vorhaltefärbung wiederholt werden, wenn zumindest eine der Färbungen der Prüfungsstichproben stärker als eine vorbestimmte Toleranz von der jeweiligen Produktzielfärbung der jeweiligen Produktkombination abweicht. Hierbei können zum Beispiel der Ermittlungsschritt, und/oder der Abweichungsmodellerstellungsschritt, und/oder der Stichprobenschritt, und/oder der Vorfärbungsmodellerstellungsschritt, und/oder der Prüfungsschritt wiederholt werden. Es kann bei dem und/oder den wiederholten Schritten zum Beispiel eine Variation und/oder Optimierung dahingehend vorgenommen werden, dass der und/oder die Schritte auf Basis der Ergebnisse der Prüfungsstichproben angepasst werden. Dies kann zum Beispiel eine Anpassung des Abweichungsmodells, des Vorfärbungsmodells, der Einflussfaktoren, und/oder der festgelegten Toleranzbereiche umfassen.

Die Überprüfung mittels Prüfungsstichproben kann eine einfache Feststellung der Genauigkeit sowie Variation und/oder Optimierung des Vorfärbungsmodells ermöglichen. Die Ergebnisse des Prüfungsschritts können von den tatsächlich zur Überprüfung verwendeten Prüfungsstichproben auf andere Produktkombinationen übertragen werden, für welche z.B. keine Prüfungsstichproben gefertigt wurden. Die Festlegung von Toleranzbereichen kann eine Steigerung der Effizienz und/oder Genauigkeit der Überprüfung mittels Prüfungsstichproben ermöglichen.

In einer Ausführungsform werden für jede Produktkombination unter Verwendung der zugeordneten Vorfärbungen aus dem Vorfärbungsmodell eine zugeordnete Vorhaltefärbung bestimmt. Dabei kann ein mit der zugeordneten Vorhaltefärbung gefärbtes Vorhaltemuster erzeugt werden. Zum Beispiel kann hierbei jeweils die einer Produktkombination im Vorfärbungsmodell zugeordneten Vorfärbung als dieser Produktkombination zugeordnete Vorhaltefärbung festgelegt werden.

Dies kann es ermöglichen, für jede Produktkombination eine zugeordnete Vorhaltefärbung z.B. vorab zu bestimmen. Dadurch kann das Bestimmen der Vorhaltefärbung bereits vorab und/oder weitestgehend unabhängig von dem eigentlichen Färbungsverfahren durchgeführt werden. So kann bei Durchführung des Verfahrens zum Färben optischer Gläser die der Auswahlkombination zugeordnete Vorhaltfärbung, also die Auswahlvorhaltefärbung, einfach aus den bereits vorab bestimmten Vorhaltefärbungen ermittelt werden. So kann das Verfahren rasch durchgeführt werden, wobei einfach auf die bereits vorab bestimmten Vorhaltefärbungen zurückgegriffen werden kann.

Die den Produktkombinationen zugeordneten Vorhaltefärbungen können parametrisiert als Färbungswert in einem Färbungsraum vorliegen und/oder physisch als Vorhaltemuster.

Die Erzeugung eines Vorhaltemusters, insbesondere eines Vorhaltemusters für jede Produktkombination, kann ein verkörpertes Festhalten der zugeordneten Vorhaltefärbung ermöglichen. Das Vorhaltemuster kann einfach verteilt werden, zum Beispiel an jede Fertigungsstätte eines Herstellers, in welcher optische Gläser mit der Auswahlkombination gefärbt werden.

In einer Ausführungsform wird bei der Bestimmung der Vorhaltefärbung diejenige zugeordnete Vorhaltefärbung ausgewählt, die der Auswahlkombination zugeordnet ist, also sozusagen die Auswahlvorhaltefärbung. Alternativ oder zusätzlich erfolgt eine Auswahl des Vorhaltemusters, das mit dieser zugehörigen Vorhaltefärbung, also der Auswahlvorhaltefärbung, gefärbt ist.

Die Bestimmung der Vorhaltefärbung durch Auswahl der der Auswahlkombination zugeordneten Vorhaltefärbung kann einfach und schnell erfolgen. Die Bestimmung durch Auswahl des entsprechend zugeordneten Vorhaltemusters, das mit der zugehörigen Auswahlvorhaltefärbung gefärbt ist, kann insbesondere für Fertigungsstätten der optischen Gläser praktisch sein und dort verwendet werden. Das Färben kann räumlich und/oder zeitlich unabhängig von der Variation und/oder Optimierung der Vorfärbung durchgeführt werden.

In einer Ausführungsform erfolgt die Bestimmung der Vorhaltefärbung zumindest teilweise empirisch. Hierdurch kann die Erfahrung eines Mitarbeiters einer Fertigungsstätte, welcher die Bestimmung der Vorhaltefärbung und/oder das Färben des optischen Glases vornimmt, in die Bestimmung einfließen und berücksichtigt werden.

In einer Ausführungsform wird bei der Bestimmung der Vorhaltefärbung die z.B. dickenabhängige Eigenfärbung des optischen Glases berücksichtigt. So kann durch die Vorhaltfärbung auch die z.B. dickenabhängige Eigenfärbung des optischen Glases in etwa kompensiert werden. Zum Beispiel Gläser mit stark divergierender, ortsabhängiger Dicke können hierbei so gefärbt werden, dass die Färbung des bearbeiteten optischen Glases insgesamt in etwa der erfassten Zielfärbung entspricht.

In einer Ausführungsform ist die zumindest eine geplante Oberflächenbearbeitung und/oder die zumindest eine geplante Produktoberflächenbearbeitung der Produktkombination und/oder zumindest eine Oberflächenbearbeitung aus der Mehrzahl der vorgegebenen Oberflächenbearbeitungen ausgebildet als: eine Reinigung, und/oder eine Vorbehandlung, und/oder eine Beschichtung, und/oder eine Entspiegelung, und/oder eine Verspiegelung, und/oder eine Härtungsbeschichtung, und/oder eine Easy-to-Clean- Beschichtung, und/oder eine Antistatik-Beschichtung, und/oder eine Anti-Beschlag-Beschichtung und/oder eine UV-Schutz-Beschichtung. Jede dieser Oberflächenbearbeitungen kann die Färbung beeinflussen, insbesondere die Transparenz oder Farbwirkung des optischen Glases.

So kann eine (geplante) Oberflächenbearbeitung die Färbung auf verschiedene Art und Weise beeinflussen.

Einerseits kann eine Beeinflussung der Färbung durch eine Oberflächenbearbeitung dadurch hervorgerufen werden, dass durch die Oberflächenbearbeitung, insbesondere während der (geplanten) Oberflächenbearbeitung die Färbung angegriffen wird, worunter insbesondere eine Schwächung der Färbung verstanden werden kann, hervorgerufen durch ein Aussetzen des optischen Glases gegenüber Lösungsmitteln im Rahmen der (geplanten) Oberflächenbearbeitung, welche die Färbung abschwächen. So kann beispielsweise das Eintauchen bzw. das Inkontaktbringen des optischen Glases mit Lösungsmitteln, beispielsweise im Rahmen einer Reinigung, einer Tauchbeschichtung mit einer Beschichtung und/oder einer Vorbehandlung dazu führen, dass die die Färbung hervorrufenden Farbstoffe aus dem optischen Glas herausgelöst und/oder herausgeschwämmt werden, wodurch das bearbeitete optische Glas anschließend eine abweichende Färbung zu einem unbearbeiteten optischen Glas aufweist.

Andererseits kann eine Beeinflussung der Färbung durch eine Oberflächenbearbeitung dadurch hervorgerufen werden, dass durch die Oberflächenbearbeitung das optische Glas eine Beschichtung erhält und/oder mit einer Beschichtung versehen wird und/oder eine Beschichtung auf dem optischen Glas ausgebildet wird, wobei diese Beschichtung durch geänderte Transmissionseigenschaften die Färbung des optischen Glases, insbesondere die Wahrnehmung der Färbung des optischen Glases, verändert. Insbesondere für geänderte Transmissionseigenschaften, welche sich nicht über den gesamten sichtbaren Spektralbereich erstrecken, sondern nur in einem Bereich hiervon, d. h. nur in einem Teilbereich des sichtbaren Spektralbereichs, vorhanden sind, führen diese geänderten Transmissionseigenschaften dazu, dass die Färbung des bearbeiteten optischen Glases abweichend von der Färbung des unbearbeiteten optischen Glases wahrgenommen wird und/oder sich hiervon unterscheidet. Unter geänderten Transmissionseigenschaften sind alle Eigenschaften zu verstehen, welche eine Auswirkung auf das Transmissionsvermögen des bearbeiteten optischen Glases aufweisen, insbesondere können geänderte Transmissionseigenschaften durch Reflexions- und/oder Absorptionseigenschaften, verursacht durch die Beschichtung, hervorgerufen werden. Beispielsweise kann eine Beschichtung, insbesondere eine Entspiegelung, eine Verspiegelung, eine Easy-to-Clean-, eine Antistatik-, eine Anti-Beschlag- und/oder eine UV-Schutz-Beschichtung, welche in einem Teilbereich des sichtbaren Spektralbereichs ein erhöhtes, insbesondere ein, im Vergleich zum restlichen und/oder übrigen und/oder nicht in diesem Teilbereich enthaltenen, verbleibenden übrigen und/oder restlichen (Teil-)Bereich des sichtbaren Spektralbereich, erhöhtes Reflexions- und/oder Absorptionsvermögen aufweist, in diesem Teilbereich die Transmission verändern, insbesondere hemmen und/oder abschwächen, wodurch Licht und/oder Strahlung aus diesem verändert transmittiert, insbesondere abgeschwächt und/oder gehemmt und/oder vermindert transmittiert wird, was zu einer unterschiedlichen und/oder abweichenden Färbung und/oder zu einer abweichenden Wahrnehmung der Färbung führt.

So kann für jede gängige Oberflächenbearbeitung eine hierdurch bedingte Abweichung der Färbung eines mit dieser Oberflächenbearbeitung bearbeiteten optischen Glases in etwa ausgeglichen werden.

In einer Ausführungsform ist oder sind die Zielfärbung, und/oder die Vorhaltefärbung, und/oder die Vorfärbung, und/oder die Produktzielfärbungen der Produktkombinationen, und/oder eine Färbung des optischen Glases, und/oder eine Färbung des bearbeiteten optischen Glases, und/oder die den Produktkombinationen zugeordneten Vorfärbungen beschrieben durch einen Lichttransmissionsgrad (*τᵥ*) in Kombination mit einem Farbort (L*a*b*) oder Farbton (a*b*). Die jeweilige Färbung kann somit als Farbkoordinate in einem Farbraum in Kombination mit einem Lichttransmissionsgrad bestimmt und/oder beschreiben sein. Alternativ zur Beschreibung im Farbraum L*a*b* kann die jeweilige Färbung auch in einem anderen Farbraum beschrieben sein. In Kombination mit dem Lichttransmissionsgrad *τᵥ* kann in der Praxis der Farbton a*b* bereits hinreichend genau für das Verfahren sein. Dadurch kann die jeweilige Färbung mathematisch genau bestimmt und/oder festgelegt sein. Die Beschreibung durch einen Lichttransmissionsgrad in Kombination mit einem Farbort, zum Beispiel dem Farbort L*a*b*, kann eine besonders genaue Beschreibung sowie einfachere, darauf basierende Berechnungen ermöglichen.

In einer Ausführungsform ist oder sind die von den Einflussfaktoren bewirkten Abweichungen, und/oder die durch das Abweichungsmodell bestimmte Färbungsabweichung beschrieben durch einen Abweichungs-Lichttransmissionsgrad ( Δ*τᵥ* ) in Kombination mit einem Abweichungs-Farbort (Δ L*a*b*) oder einem Abweichungs-Farbton (Δ a*b*). Wird nicht der Farbort L*a*b* sondern ein dazu alternativer Farbort verwendet, so kann auch der Abweichungs-Farbort in diesem alternativen Farbort bestimmt sein. Die Beschreibung durch einen Abweichungs-Lichttransmissionsgrad in Kombination mit einem Abweichungs-Farbort, zum Beispiel dem Abweichungs-Farbort ΔL*a*b*, oder Abweichungs-Farbton kann eine besonders genaue Beschreibung sowie einfachere, darauf basierende Berechnungen ermöglichen.

Ein Aspekt betrifft eine Vorrichtung zum Färben eines optischen Glases, insbesondere eines Brillenglases, wobei die Vorrichtung ein Erfassungsmodul umfasst, welches konfiguriert zum Erfassen zumindest einer geplanten Oberflächenbearbeitung an zumindest einer Oberfläche des optischen Glases ist, durch welche aus dem optischen Glas ein bearbeitetes optisches Glas wird. Das Erfassungsmodul ist ebenfalls zum Erfassen einer Zielfärbung des bearbeiteten optischen Glases konfiguriert. Ein Ermittlungsmodul ist konfiguriert zum Ermitteln einer Vorhaltefärbung für das optische Glas, mit welcher es als bearbeitetes optisches Glas nach Vornahme der zumindest einen geplanten Oberflächenbearbeitung in etwa die Zielfärbung aufweist. Ein Färbemodul ist konfiguriert zum Färben des optischen Glases mit der Vorhaltefärbung. Das Färbemodul kann vorzugsweise konfiguriert sein zum Färben des optischen Glases mit der Vorhaltefärbung gemäß dem der voranstehend beschriebenen Verfahren.

Mit der Vorrichtung kann das Verfahren gemäß dem voranstehend beschriebenen Aspekt durchgeführt werden. Deswegen betreffen die Ausführungen zum Verfahren auch die Vorrichtung und umgekehrt.

Die Vorrichtung kann einen Computer und/oder Prozessor umfassen, auf dem zumindest ein programmiertes Softwaremodul vorinstalliert ist, welches das Verfahren zum Färben unterstützt und/oder steuert. Beispielsweise können auf einem Speichermedium mehrere spezifische Produktkombinationen mit bereits bestimmten zugehörigen Vorhaltefärbungen gespeichert sein. Daraus kann das Ermittlungsmodul die der Auswahlkombination zugeordnete Vorhaltefärbung ermitteln.

Ein Aspekt betrifft ein Glassystem mit mehreren Gläsern, wobei ein erstes der Gläser als ein bearbeitetes optisches Glas, insbesondere als ein Brillenglas, ausgebildet ist. Ein zweites der Gläser ist als ein Glasmuster ausgebildet, welches eine Zielfärbung aufweist. Dabei ist am ersten Glas eine geplante Oberflächenbearbeitung vorgenommen, und das erste Glas weist in etwa die Zielfärbung des Glasmusters auf. Das erste Glas, also das bearbeitete optische Glas, ist zumindest mittels der geplanten Oberflächenbearbeitung bearbeitet und zudem gefärbt. Die Färbung entspricht dabei in etwa der erfassten Zielfärbung, also der Färbung des zweiten Glases, welches als ein Glasmuster aus einem Portfolio eines Optikers und/oder Herstellers ausgebildet sein kann. Dabei kann das bearbeitete optische Glas z.B. mittels des voranstehend beschriebenen Verfahrens gefärbt sein.

Für das Glasmuster gilt das bereits zu dem voranstehenden Aspekt Ausgeführte. So kann die Zielfärbung anhand des zumindest einen Glasmusters aus dem Glassystem ausgewählt sein, welches die Zielfärbung aufweist. Hierbei kann z.B. ein Optiker einen Kunden die Zielfärbung aus einem Muster-Portfolio auswählen lassen, welches eine Mehrzahl unterschiedlich gefärbter Glasmuster aufweist. Hierbei können die Glasmuster des Muster-Portfolios zumindest teilweise oder vollständig als Bestandteile des Glassystems ausgebildet sein. Das oder die Glasmuster kann oder können unbeschichtet und/oder unbearbeitet ausgebildet sein. An dem oder den Glasmuster(n) können zumindest teilweise Oberflächenbearbeitungen vorgenommen worden sein, z.B. eine Hartlackbeschichtung als Kratzschutz, oder eine Kombination aus einer Hartlackbeschichtung und einer Entspiegelungsschicht. Das erste Glas, also das bearbeitete optische Glas, weist andere Oberflächenbearbeitungen auf als das Glasmuster. Dabei können an dem ersten Glas mehr, weniger, oder gleich viele aber andere Oberflächenbearbeitungen vorgenommen sein als am Glasmuster.

Das Glassystem, z.B. das erste Glas des Glassystems, kann mittels Durchführung des voranstehend beschriebenen Verfahrens erzeugt werden. Die Glasmuster des Glassystems können dabei zum Erfassen der Zielfärbung genutzt werden. Deswegen betrifft die Beschreibung des Verfahrens gemäß dem voranstehend beschriebenen Aspekt auch das Glassystem und umgekehrt.

Im Rahmen dieser Erfindung können die Begriffe "im Wesentlichen" und/oder "etwa" so verwendet sein, dass sie eine Abweichung von bis zu 5% von einem auf den Begriff folgenden Zahlenwert beinhalten, eine Abweichung von bis zu 5° von einer auf den Begriff folgenden Richtung und/oder von einem auf den Begriff folgenden Winkel.

Nachfolgend werden bevorzugte Ausführungsformen der Erfindung beispielhaft beschrieben. Einzelelemente der beschriebenen Ausführungsformen sind nicht auf die jeweilige Ausführungsform beschränkt. Vielmehr können Elemente der Ausführungsformen beliebig miteinander kombiniert werden und neue Ausführungsformen dadurch erstellt werden. Es zeigt:
- Figur 1: ein Flussdiagramm einer Ausführungsform eines Verfahrens zum Färben eines optischen Glases; und
- Figur 2: ein Flussdiagramm einer weiteren Ausführungsform eines Verfahrens zum Färben eines optischen Glases.

### Färben mit Ermitteln einer Vorhaltefärbung

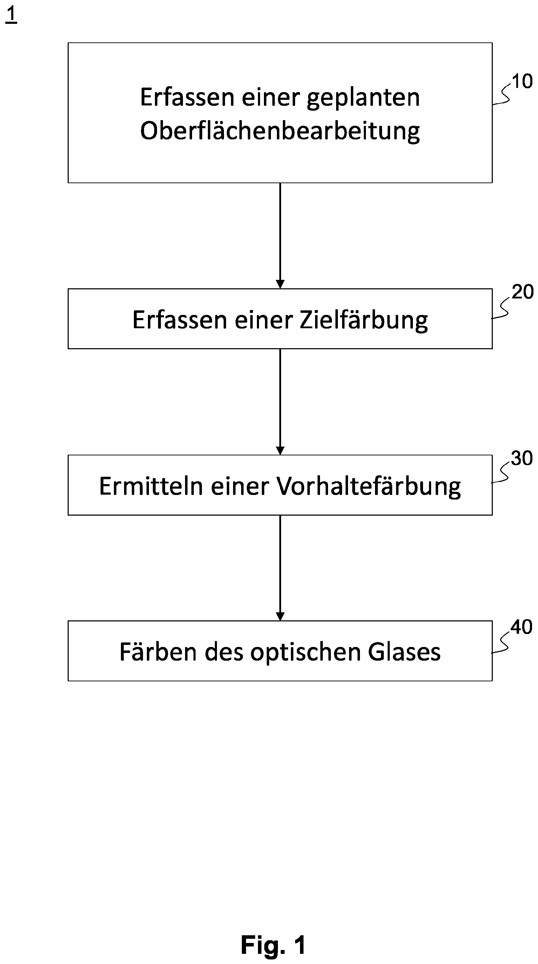

**Figur 1** zeigt beispielhaft ein Flussdiagramm einer Ausführungsform eines ersten Verfahrens 1 zum Färben eines optischen Glases, insbesondere eines Brillenglases. Hierbei wird in einem ersten Erfassungsschritt 10 zumindest eine am optischen Glas geplante Oberflächenbearbeitung erfasst und in einem zweiten Erfassungsschritt 20 eine Zielfärbung für das optische Glas. Die geplante Oberflächenbearbeitung kann z. B. von einem Optiker und/oder Kunden aus einer Mehrzahl von vorgegebenen Oberflächenbearbeitungen ausgewählt sein. Die Zielfärbung kann z.B. von dem Kunden aus einer Mehrzahl von vorgegebenen Zielfärbungen ausgewählt sein.

Die Mehrzahl von vorgegebenen Zielfärbungen kann als ein Farbportfolio z.B. eines Optikers für optische Gläser ausgebildet sein, welches beispielsweise einem Kunden präsentiert werden kann. Der Kunde kann aus dem Farbportfolio und/oder den Zielfärbungen eine von ihm gewünschte Zielfarbe auswählen. Diese ausgewählte Zielfarbe kann im zweiten Erfassungsschritt 20 erfasst werden, d.h. z.B. an eine Fertigungs- und/oder Färbungsstätte übersandt und/oder dort registriert werden.

Die Mehrzahl von vorgegebenen Oberflächenbearbeitungen kann Oberflächenbeschichtungen umfassen, wie beispielsweise Anti-Beschlag-Beschichtungen und/oder Härtungsbeschichtungen, welche der Kunde direkt auswählen kann. Sie kann auch Oberflächenbearbeitungen umfassen, die nicht unbedingt von dem Kunden ausgewählt werden müssen, sich aber in der Fertigung durch bestimmte Kombinationen aus Oberflächenbearbeitungen ergeben, wie beispielsweise spezielle Vorbehandlungs- und/oder Reinigungsbearbeitungen. Diese Oberflächenbearbeitungen können zum Beispiel durch einen Optiker ausgewählt werden oder automatisch bestimmt sein.

Die beiden Erfassungsschritte 10 und 20 können ein Erfassen der bereits erfolgten Auswahl der Zielfärbung und der zumindest einen geplanten Oberflächenbearbeitung umfassen. Alternativ können sie die Auswahl selbst umfassen. Hierbei können die Auswahl und das Erfassen voneinander getrennt sein, sodass der Kunde beispielsweise bei dem Optiker vor Ort eine Auswahl für ein optisches Glas, insbesondere für eine Brillenglas, treffen kann und diese Auswahl dann z.B. in der Fertigungsstätte an einem anderen Ort erfasst wird.

Das Erfassen zumindest einer geplanten Oberflächenbearbeitung und einer Zielfärbung kann somit gemeinsam oder getrennt erfolgen. Die beiden Erfassungsschritte 10 und 20 können in einer beliebigen Reihenfolge zeitversetzt oder zeitgleich durchgeführt werden.

Dazu können Materialdaten erfasst werden, welche das Material des optischen Glases betreffen. Die Materialdaten können z.B. Informationen über ein gewünschtes Glasmaterial enthalten, also z.B. Kunststoff oder Glas. Zudem können die Materialdaten weitere Materialeigenschaften betreffen, z.B. ob ein hochbrechendes Glasmaterial verwendet werden soll, und wenn ja z.B. welchen Brechungsindex das Glasmaterial aufweisen soll.

Weiterhin können Refraktionsdaten für das optische Glas und/oder Ausmaßdaten erfasst werden. Diese Refraktionsdaten können Informationen über eine vorgesehene optische Wirkung des optischen Glases umfassen und/oder Informationen über geplante Ausmaße des optischen Glases, z.B. Randungsdaten für eine gewünschte Brillenfassung.

Nach den beiden Erfassungsschritten 10 und 20 ist durch die erfassten Glasinformationen eine erfasste Färbungs-Oberflächenbearbeitungs-Kombination festgelegt, welche auch als Auswahlkombination bezeichnet werden kann.

Nach dem Erfassen der geplanten Oberflächenbearbeitung und der Zielfärbung erfolgt in einem Vorhaltefärbungs-Ermittlungsschritt 30 ein Ermitteln einer Vorhaltefärbung. Die Vorhaltefärbung kann spezifisch zu der erfassten Auswahlkombination ausgebildet sein, d.h. der erfassten Auswahlkombination kann genau eine spezifische Vorhaltefärbung zugeordnet sein, welche im Vorhaltefärbungs-Ermittlungsschritt 30 ermittelt wird.

Es wird eine oder diejenige Vorhaltefärbung ermittelt, mit welcher gefärbt das bearbeitete optische Glas nach Vornahme der geplanten Oberflächenbearbeitung in etwa die Zielfärbung aufweist. Hierbei kann bereits vor der Vornahme der geplanten Oberflächenbearbeitung deren Einfluss auf die Färbung des bearbeiteten optischen Glases berücksichtigt und/oder in etwa ausgeglichen werden.

Nachdem die Vorhaltefärbung ermittelt ist, wird das optische Glas in einem Färbungsschritt 40 mit der im Vorhaltefärbungs-Ermittlungsschritt 30 ermittelten Vorhaltefärbung gefärbt. Das optische Glas weist dann die Vorhaltefärbung auf.

Das optische Glas kann in einem dem Färbungsschritt 40 nachgelagerten Bearbeitungsschritt der zumindest einen geplanten Oberflächenbearbeitung unterzogen werden, wodurch es zu dem bearbeiteten optischen Glas wird.

Die Färbung eines optischen Glases, welches vor der Vornahme der geplanten Oberflächenbearbeitung nicht mit der Vorhaltefärbung, sondern unmittelbar mit der letztlich gewünschten Zielfärbung gefärbt ist, kann nach der Bearbeitung deutlich von der Zielfärbung abweichen. Für solche Gläser muss nach der Vornahme der geplanten Oberflächenbearbeitung geprüft werden, ob die Färbung des bearbeiteten optischen Glases in etwa (zum Beispiel innerhalb eines Toleranzbereichs) der Zielfärbung entspricht. Ist dies nicht der Fall, so muss das Glas nachgefärbt werden oder, sollte dies auf Grund der Art der bereits vorgenommenen geplanten Oberflächenbearbeitung und/oder der Art des verwendeten Färbeverfahrens nicht mehr möglich sein, muss ein neues Glas gefertigt werden.

Das Färben des optischen Glases mit der Vorhaltefärbung ermöglicht demnach, dass die Färbung des Glases auch nach der Vornahme der geplanten Oberflächenbearbeitung in etwa der Zielfärbung entspricht. Hierdurch können die beschriebenen Prüfungs- und/oder Nachfärbeprozess und/oder Neuanfertigungen vermeiden werden. Dies kann eine Steigerung der Effizienz des Färbe- und/oder Fertigungsprozesses von optischen Gläsern ermöglichen. Somit kann mittels des ersten Verfahrens 1 das Färben unaufwändiger, schneller, materialsparender und/oder kostengünstiger durchgeführt werden.

Das Verfahren kann zumindest teilweise computerimplementiert durchgeführt werden. So können z.B. die beiden Erfassungsschritte 10 und 20 zumindest computergestützt durchgeführt werden, indem z.B. die relevanten Daten per Computer übermittelt und registriert wird. Auch die Auswahlkombination kann auf einem Computer bereitgestellt und/oder registriert werden. Auf Basis der erfassten Daten, insbesondere auf Basis der Auswahlkombination, kann die Vorhaltefärbung computergestützt ermittelt werden. So kann z.B. jeder Auswahlkombination genau eine Vorhaltefärbung zugeordnet sein, welche passend zur Auswahlkombination vom Computer und/oder softwaregestützt ausgegeben und/oder angezeigt wird.

Das erste Verfahren 1 kann weitere Verfahrensschritte aufweisen, welche nicht in dem in Fig. 1 gezeigten Flussdiagramm enthalten sind.

### Färben mit Ermitteln und Bestimmen einer Vorhaltefärbung

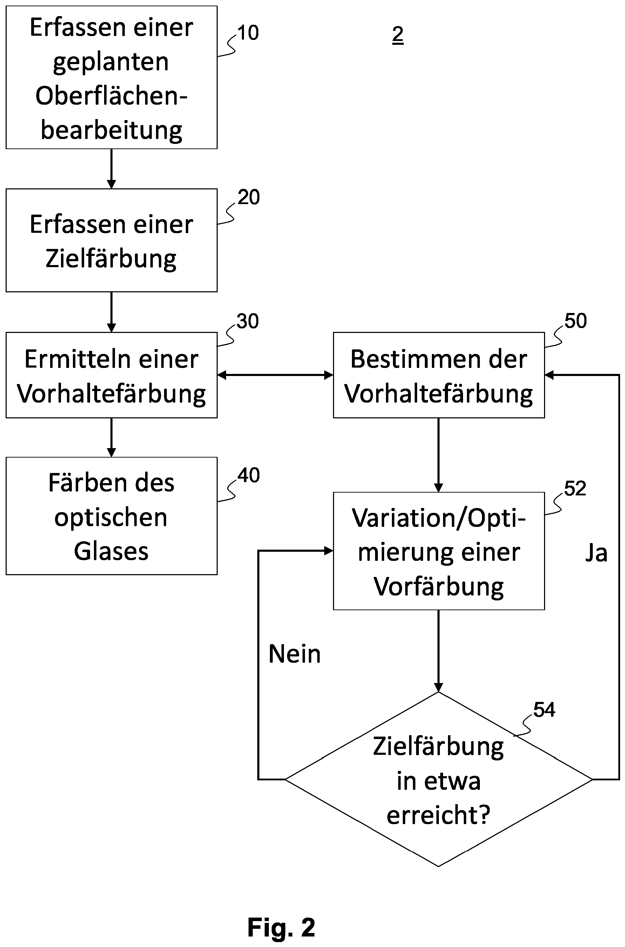

**Figur 2** zeigt beispielhaft ein Flussdiagramm einer Ausführungsform eines zweiten Verfahrens 2 zum Färben eines optischen Glases, insbesondere eines Brillenglases. Das zweite Verfahren 2 kann als Ausführungsform des in Fig. 1 gezeigten ersten Verfahrens ausgebildet sein. So weist auch das zweite Verfahren 2 sämtliche Verfahrensschritte 10, 20, 30 und 40 des ersten Verfahrens 1 auf. Für diese Verfahrensschritte 10, 20, 30 und 40 gilt das bereits zum ersten Verfahren 1 ausgeführte gleichermaßen. Zusätzlich weist das zweite Verfahren 2 jedoch weitere Verfahrensschritte auf

Neben der Ermittlung der Vorhaltefärbung im Vorhaltefärbungs-Ermittlungsschritt 30 kann die Bestimmung der Vorhaltefärbung zudem eine Auswirkung auf den Färbe- und/oder Fertigungsprozesses von optischen Gläsern haben.

Das Erfassen einer geplanten Oberflächenbearbeitung, also der erste Erfassungsschritt 10, das Erfassen einer Zielfärbung, also der zweite Erfassungsschritt 20, das Ermitteln einer Vorhaltefärbung, also der Vorhaltefärbungs-Ermittlungsschritt 30, und das Färben des optischen Glases mit der Vorhaltefärbung, also der Färbungsschritt 40, kann hierbei wie zu Figur 1 erläutert erfolgen.

Das Bestimmen der Vorhaltefärbung erfolgt in einem dem Ermitteln der Vorhaltefärbung vor- und/oder nebengelagerten Bestimmungsschritt 50. Mit anderen Worten kann das Bestimmen der Vorhaltefärbung im Bestimmungsschritt 50 dem Ermitteln der Vorhaltefärbung im Ermittlungsschritt 40 zeitlich vorausgehen und/oder etwa zeitgleich erfolgen. Das Bestimmen der Vorhaltefärbung kann auch erst durch den Ermittlungsschritt 40 getriggert werden. Bevorzugt ist die Vorhaltefärbung jedoch bereits vor dem Ermittlungsschritt 40 vorbestimmt, so dass die geeignete Vorhaltefärbung für die Durchführung des Ermittlungsschritts 40 lediglich ausgelesen werden muss. Das Bestimmen und Ermitteln können am selben Ort oder örtlich getrennt erfolgen.

Das in Figur 2 gezeigte Bestimmen der Vorhaltefärbung erfolgt mittels einer Variation und/oder Optimierung einer Vorfärbung in einem Variationsschritt 52. Das Bestimmen und insbesondere der Variationsschritt 52 wird mit der Zielsetzung durchgeführt, dass das mit der Vorfärbung gefärbte optische Glas als bearbeitetes optisches Glas nach der Vornahme der geplanten Oberflächenbearbeitung in etwa die Zielfärbung aufweist oder aufweisen soll.

Die Variation und/oder Optimierung kann in einem oder mehreren Schritten erfolgen. Als Startpunkt der Variation und/oder Optimierung kann die Zielfärbung als Vorfärbung verwendet werden. Die Vorfärbung kann ein- oder mehrfach derart variiert und/oder optimiert werden, dass das mit der Vorfärbung gefärbte optische Glas als bearbeitetes optisches Glas nach der Vornahme der geplanten Oberflächenbearbeitung in etwa die Zielfärbung aufweist.

Es kann z.B. nach jedem einzelnen Variationsschritt, also z.B. bereits nach der ersten Variation und/oder Optimierung der Vorfärbung in einem Abbruchsschritt 54 geprüft werden, ob mit der (variierten und/oder optimierten) Vorfärbung bei dem bearbeiteten optischen Glas in etwa die Zielfärbung erreicht wird. Ist dies der Fall, kann die aktuelle Vorfärbung als die der Auswahlkombination zugeordnete Vorhaltefärbung bestimmt werden.

Weist das mit der Vorfärbung gefärbte bearbeitete optische Glas die Zielfärbung nicht oder ungenügend genau auf, kann die Vorfärbung weiter variiert und/oder optimiert werden, insbesondere wieder im Variationsschritt 52, bis das mit der Vorfärbung gefärbte optische Glas als bearbeitetes optisches Glas nach der Vornahme der geplanten Oberflächenbearbeitung in etwa die Zielfärbung aufweist. Ergibt die Überprüfung im Abbruchsschritt 54, dass die Zielfärbung in etwa erreicht ist, so ist die zu der aktuellen Auswahlkombination gehörige Vorhaltefärbung bestimmt und kann deswegen im Vorhaltefärbungs-Ermittlungsschritt 30 ausgelesen werden.

Der im Abbruchsschritt 54 erfolgende Vergleich der erfassten und/oder ausgewählten Zielfärbung mit der Gesamtfärbung des optischen Glases, welches mit der aktuellen Vorfärbung gefärbt ist und mit der zumindest einen erfassten und/oder ausgewählten geplanten Oberflächenbearbeitung bearbeitet ist, kann z.B. simuliert und/oder berechnet und/oder mittels zumindest eines physischen Glasmusters erfolgen.

Das Bestimmen der Vorhaltefärbung mittels Variation und/oder Optimierung der Vorfärbung kann hierbei zumindest teilweise empirisch und/oder zumindest teilweise unter Berücksichtigung einer Mehrzahl von Produktkombinationen erfolgen.

Die zuletzt verwendete Vorfärbung wird als Vorhaltefärbung bestimmt. Die Vorhaltefärbung wird für die Auswahlkombination aus Zielfärbung und geplanter Oberflächenbearbeitung dokumentiert und/oder abgespeichert, z.B. auf einem Computerspeicher und/oder in einer Datenbank. Es kann für jede Produktkombination z.B. ein physisches Vorhaltemuster angefertigt werden, welches die der Produktkombination zugeordnete Vorhaltefärbung aufweist.

### Empirisches Bestimmen der Vorhaltefärbung

Das rein empirische Bestimmen der Vorhaltefärbung erfolgt in einer oder mehreren Variations- und/oder Optimierungsschleifen. Hierbei wird das optische Glas mit der Vorfärbung gefärbt, die geplante Oberflächenbearbeitung wird vorgenommen, und das gefärbte bearbeitete optische Glas wird mit einem Muster verglichen, welches die Zielfärbung aufweist.

Ist die Zielfärbung nicht in etwa erreicht, so wird die Vorfärbung wieder variiert und/oder optimiert, ein weiteres optisches Glas wird mit der Vorfärbung gefärbt, die geplante Oberflächenbearbeitung wird vorgenommen, und das gefärbte bearbeitete optische Glas wird mit dem Muster verglichen.

Dieses empirische Vorgehen kann hierbei mehrfach wiederholt werden, bis in etwa die Zielfärbung erreicht ist. In diesem Fall wird die zuletzt verwendete Vorfärbung als Vorhaltefärbung bestimmt.

### Modellbasiertes Bestimmen der Vorhaltefärbung

Alternativ zu der empirischen Bestimmung der Vorhaltefärbung kann sie auch weitestgehend mathematisch und/oder modellbasiert ermittelt werden. Dazu kann das Bestimmungsverfahren weitere Verfahrensschritte umfassen, z.B.:
- zumindest einen Ermittlungsschritt zum Ermitteln von Einflussfaktoren einer Produktkombination; und/oder
- zumindest einen Abweichungsmodellerstellungsschritt, in welchem ein Abweichungsmodell erstellt wird; und/oder
- zumindest eine Stichprobenprüfung, in welcher des Abweichungsmodell zumindest stichprobenhaft geprüft wird; und/oder
- zumindest einen Vorfärbungsmodellerstellungsschritt, in welchem ein Vorfärbungsmodell erstellt wird; und/oder
- zumindest einen Prüfungsschritt, in welchem das Vorfärbungsmodell mittels Prüfungsstichproben geprüft wird.

Diese Verfahrensschritte sind im der Figurenbeschreibung voranstehenden Beschreibungssteil näher ausgeführt und erläutert.

Das Verfahren kann ein material- und/oder zeitunaufwändiges Färben eines optischen Glases auf kontrollierte Art und Weise ermöglichen.

### Bezugszeichenliste

- 1: erstes Verfahren
- 2: zweites Verfahren
- 10: erster Erfassungsschritt
- 20: zweiter Erfassungsschritt
- 30: Vorhaltefärbungs-Ermittlungsschritt
- 40: Färbungsschritt
- 50: Bestimmungsschritt
- 52: Variationsschritt
- 54: Abbruchsschritt

## Patentansprüche

1. Verfahren (1; 2) zum Färben eines optischen Glases, insbesondere eines Brillenglases, wobei das Verfahren umfasst:
- Erfassen zumindest einer geplanten Oberflächenbearbeitung an zumindest einer Oberfläche des optischen Glases, durch welche aus dem optischen Glas ein bearbeitetes optisches Glas wird,
- Erfassen einer Zielfärbung des bearbeiteten optischen Glases,
- Ermitteln einer Vorhaltefärbung für das optische Glas, mit welcher es als bearbeitetes optisches Glas nach Vornahme der zumindest einen geplanten Oberflächenbearbeitung in etwa die Zielfärbung aufweist, und
- Färben des optischen Glases mit der Vorhaltefärbung.

2. Verfahren gemäß Anspruch 1, wobei die Vorhaltefärbung mittels Variation und/oder Optimierung einer Vorfärbung dahingehend bestimmt ist oder wird, dass das mit der Vorfärbung gefärbte optische Glas als bearbeitetes optisches Glas nach der Vornahme der zumindest einen geplanten Oberflächenbearbeitung in etwa die Zielfärbung aufweist.

3. Verfahren gemäß Anspruch 2, wobei als Startpunkt der Variation und/oder Optimierung als Vorfärbung die Zielfärbung verwendet wird.

4. Verfahren gemäß einem der Ansprüche 2 oder 3, wobei bei der Variation und/oder Optimierung der Vorfärbung eine Mehrzahl von Produktkombinationen berücksichtigt werden, von denen jede Produktkombination aufweist:
- eine Produktzielfärbung, die aus einer Mehrzahl von vorgegebenen Zielfärbungen ausgewählt ist, welche die erfasste Zielfärbung umfasst und
- zumindest eine geplante Produktoberflächenbearbeitung, die aus einer Mehrzahl von vorgegebenen Oberflächenbearbeitungen ausgewählt ist, welche die erfasste zumindest eine Oberflächenbearbeitung umfasst;
wobei die Mehrzahl der Produktkombinationen eine Auswahlkombination umfasst, welche die zumindest eine erfasste Oberflächenbearbeitung und die erfasste Zielfärbung aufweist.

5. Verfahren gemäß Anspruch 4, wobei für jede Produktkombination in einem Ermittlungsschritt mehrere Einflussfaktoren ermittelt werden,
wobei die Einflussfaktoren Abweichungen einer Färbung des bearbeiteten optischen Glases nach Vornahme der zumindest einen geplanten Produktoberflächenbearbeitung von der Färbung des optischen Glases vor der Vornahme der zumindest einen geplanten Produktoberflächenbearbeitungen bewirken.

6. Verfahren gemäß Anspruch 5, wobei als zumindest einer der Einflussfaktoren ermittelt wird:
- das Material des optischen Glases, und/oder
- die zumindest eine geplante Produktoberflächenbearbeitungen, und/oder
- eine spektrale innere Transmission des optischen Glases, und/oder
- eine spektrale Transmission der Oberfläche des bearbeiteten optischen Glases nach Vornahme der zumindest einen geplanten Produktoberflächenbearbeitung.

7. Verfahren gemäß einem der Ansprüche 4 bis 6, wobei in einem Abweichungsmodellerstellungsschritt für jede Produktkombination ein Abweichungsmodell erstellt wird, welches für jede Produktkombination eine spezifische Färbungsabweichung enthält, die einen Färbungsunterschied beschreibt zwischen der Produktzielfärbung der jeweiligen Produktkombination einerseits und einer sich ergebenden Gesamtfärbung eines optischen Glases andererseits, welches mit dieser Produktzielfärbung gefärbt ist und zusätzlich mit den Produktoberflächenbearbeitung der jeweiligen Produktkombination bearbeitetet ist.

8. Verfahren gemäß einem der Ansprüche 4 bis 7, wobei in einem Vorfärbungsmodellerstellungsschritt ein Vorfärbungsmodell erstellt wird, welches für jede Produktkombination eine zugeordnete Vorfärbung enthält, welche so bestimmt ist, dass ein mit dieser zugeordneten Vorfärbung gefärbtes optisches Glas nach Vornahme der jeweiligen zumindest einen Produktoberflächenbearbeitung die Produktzielfärbung aufweist.

9. Verfahren gemäß Anspruch 7 und 8, wobei die zugeordnete Vorfärbung basierend auf der für die jeweilige Produktkombination im Abweichungsmodell enthaltenen spezifischen Färbungsabweichung bestimmt ist.

10. Verfahren gemäß einem der Ansprüche 8 oder 9, wobei für jede Produktkombination unter Verwendung der zugeordneten Vorfärbungen aus dem Vorfärbungsmodell eine zugeordnete Vorhaltefärbung bestimmt wird, und insbesondere ein mit der zugeordneten Vorhaltefärbung gefärbtes Vorhaltemuster erzeugt wird.

11. Verfahren gemäß Anspruch 10, wobei bei der Bestimmung der Vorhaltefärbung diejenige zugeordnete Vorhaltefärbung ausgewählt wird, die der Auswahlkombination zugeordnet ist, und/oder durch Auswahl des Vorhaltemusters, das mit dieser zugehörigen Vorhaltefärbung gefärbt ist.

12. Verfahren gemäß einem der vorangegangenen Ansprüche, wobei die zumindest eine geplante Oberflächenbearbeitung und/oder die zumindest eine geplante Produktoberflächenbearbeitung der Produktkombination und/oder zumindest eine Oberflächenbearbeitung aus der Mehrzahl der vorgegebenen Oberflächenbearbeitungen ausgebildet ist als:
- eine Reinigung, und/oder
- eine Vorbehandlung, und/oder
- eine Beschichtung, und/oder
- eine Entspiegelung, und/oder
- eine Verspiegelung, und/oder
- eine Härtungsbeschichtung, und/oder
- eine Easy-to-Clean- Beschichtung, und/oder
- eine Antistatik-Beschichtung, und/oder
- eine Anti-Beschlag-Beschichtung und/oder
- eine UV-Schutz-Beschichtung, und/oder
- eine Blauschutz-Beschichtung.

13. Verfahren gemäß einem der vorangegangenen Ansprüche, wobei
- die Zielfärbung, und/oder
- die Vorhaltefärbung, und/oder
- die Vorfärbung, und/oder
- die Produktzielfärbungen der Produktkombinationen, und/oder
- eine Färbung des optischen Glases, und/oder
- eine Färbung des bearbeiteten optischen Glases, und/oder
- die den Produktkombinationen zugeordnete Vorfärbungen
beschrieben ist oder sind durch einen Lichttransmissionsgrad ( *τᵥ* ) in Kombination mit einem Farbort (L*a*b*) oder Farbton (a*b*),
und/oder
- die von den Einflussfaktoren bewirkten Abweichungen, und/oder
- die durch das Abweichungsmodell bestimmte spezifische Färbungsabweichung
beschrieben sind durch einen Abweichungs-Lichttransmissionsgrad (Δ*τᵥ*) in Kombination mit einem Abweichungs-Farbort (ΔL*a*b*) oder einem Abweichungs-Farbton (Δa*b*).

14. Vorrichtung zum Färben eines optischen Glases, insbesondere eines Brillenglases, wobei die Vorrichtung umfasst:
- ein Erfassungsmodul, welches konfiguriert ist
- zum Erfassen zumindest einer geplanten Oberflächenbearbeitung an zumindest einer Oberfläche des optischen Glases, durch welche aus dem optischen Glas ein bearbeitetes optisches Glas wird, und
- zum Erfassen einer Zielfärbung des bearbeiteten optischen Glases,
- ein Ermittlungsmodul, welches konfiguriert ist zum Ermitteln einer Vorhaltefärbung für das optische Glas, mit welcher es als bearbeitetes optisches Glas nach Vornahme der zumindest einen geplanten Oberflächenbearbeitung in etwa die Zielfärbung aufweist, und
- ein Färbemodul, welches konfiguriert ist zum Färben des optischen Glases mit der Vorhaltefärbung, insbesondere gemäß einem der Ansprüche 1 bis 13.

15. Glassystem mit mehreren Gläsern, wobei ein erstes der Gläser als ein bearbeitetes optisches Glas, insbesondere als ein Brillenglas, ausgebildet ist, und ein zweites der Gläser als ein Glasmuster ausgebildet ist, welches eine Zielfärbung aufweist, wobei am ersten Glas eine geplante Oberflächenbearbeitung vorgenommen ist, und das erste Glas in etwa die Zielfärbung des Glasmusters aufweist.
